# EUROPEAN PATENT APPLICATION

(11) **EP 4 474 426 A1**
(43) Date of publication of application: **11.12.2024**
(21) Application number: 23749725.0
(22) Date of filing: 31.01.2023
(51) Int. Cl.: C08L 69/00, C08K 5/521, C08L 25/12, C08L 51/00

(54) **POLYCARBONATE-BASED RESIN COMPOSITION AND MOLDED OBJECT**

(30) Priority: 01.02.2022 JP 2022014012
(71) Applicant: Kaneka Corporation, Osaka-shi, Osaka 530-8288 (JP)
(72) Inventor: INATANI, Bunyu, Hyogo 676-8688 (JP)
(74) Representative: Vossius & Partner Patentanwälte Rechtsanwälte mbB
(86) International application number: PCT/JP2023/002976
(87) International publication number: WO 2023/149409

(57) **Abstract**

A resin composition contains a polycarbonate resin (A), a flow improver (B) containing a first polymer (b1), and a core-shell elastic material (C). The amount of the flow improver (B) is from 1 to 15 wt% of the total amount of the polycarbonate resin (A) and the flow improver (B), and the amount of the core-shell elastic material (C) is from 1 to 30 parts by weight per 100 parts by weight of the total amount of the polycarbonate resin (A) and the flow improver (B). The first polymer (b1) contains 50 to 70 wt% of an aromatic vinyl compound, 5 to 20 wt% of a vinyl cyanide compound, and 10 to 45 wt% of another copolymerizable vinyl compound as constituent monomers based on 100 wt% of the total first polymer (b1). The first polymer (b1) has a weight-average molecular weight of 15,000 to 120,000.

## Description

### Technical Field

The present invention relates to a resin composition containing a polycarbonate resin and a molded article of the resin composition.

### Background Art

Molded articles made with polycarbonate resins are excellent in properties such as transparency, impact resistance, heat resistance, dimensional stability, and self-extinguishing ability (flame retardancy) and used in a wide variety of fields such as those of electrical, electronic, and OA equipment, optical components, precision machinery, security and healthcare, building materials, and miscellaneous goods.

A known technique for enhancing the impact resistance of a molded article made with a polycarbonate resin is to blend the polycarbonate resin with an ABS resin formed by graft polymerization of diene rubber such as butadiene rubber or styrene-butadiene copolymer with styrene-acrylonitrile copolymer (see Patent Literature 1, for example).

Polycarbonate resins have relatively low melt fluidity. Thus, it is also known practice to blend a polycarbonate resin with a flow improver.

For example, Patent Literature 2 describes blending a polycarbonate resin with a flow improver that is a polymer having a weight-average molecular weight of less than 15,000 and containing a (meth)acrylate monomer as an essential component. The polymer is described as containing 1 to 99 wt% of the (meth)acrylate monomer and 99 to 1 wt% of a vinyl aromatic monomer. Patent Literature 2 further describes blending the polycarbonate resin with an ABS resin.

Patent Literature 3 describes blending an aromatic polycarbonate with an ABS resin and a non-crosslinked acrylic polymer having a weight-average molecular weight of 25,000 to 50,000. The non-crosslinked acrylic polymer is described as containing 60 to 100 wt% of a methyl methacrylate monomer.

### Citation List

### Patent Literature

PTL 1: Japanese Laid-Open Patent Application Publication No. 2000-319496
PTL 2: Japanese Laid-Open Patent Application Publication (Translation of PCT Application) No. 2006-509862
PTL 3: Japanese Patent No. 5781761

### Summary of Invention

### Technical Problem

In the case of conventionally known polycarbonate resin compositions, improving their melt fluidity tends to reduce their impact resistance or heat resistance, and improving their impact resistance tends to reduce their melt fluidity or heat resistance. It is therefore difficult to obtain a polycarbonate resin composition having a good balance of melt fluidity, impact resistance, and heat resistance.

In view of the above circumstances, the present invention aims to provide a polycarbonate resin composition having a good balance of melt fluidity, impact resistance, and heat resistance and a molded article of the polycarbonate resin composition.

### Solution to Problem

As a result of intensive studies, the present inventors have found that the above problem can be solved by blending a polycarbonate resin with a core-shell elastic material and a flow improver containing a polymer having a given monomer composition and a given weight-average molecular weight. This finding has led the inventors to the present invention.

Specifically, the present invention relates to a polycarbonate resin composition containing:
a polycarbonate resin (A);
a flow improver (B) containing a first polymer (b1); and
a core-shell elastic material (C), wherein
an amount of the flow improver (B) is from 1 to 15 wt% of a total amount of the polycarbonate resin (A) and the flow improver (B),
an amount of the core-shell elastic material (C) is from 1 to 30 parts by weight per 100 parts by weight of the total amount of the polycarbonate resin (A) and the flow improver (B),
the first polymer (b1) contains 50 to 70 wt% of an aromatic vinyl compound, 5 to 20 wt% of a vinyl cyanide compound, and 10 to 45 wt% of another copolymerizable vinyl compound as constituent monomers based on 100 wt% of the total first polymer (b1), and
the first polymer (b1) has a weight-average molecular weight of 15,000 to 120,000.

The present invention also relates to a molded article produced by molding the polycarbonate resin composition.

### Advantageous Effects of Invention

The present invention can provide a polycarbonate resin composition having a good balance of melt fluidity, impact resistance, and heat resistance and a molded article of the polycarbonate resin composition.

In a preferred aspect of the present invention, a polycarbonate resin composition having not only a good balance of melt fluidity, impact resistance, and heat resistance but also high flame retardancy can be provided by adding a flame retardant. The present invention can provide an improvement in flame retardancy and thus offers the advantage of reducing the amount of the flame retardant added to the polycarbonate resin composition.

### Description of Embodiments

Hereinafter, embodiments of the present invention will be described in detail.

A resin composition according to the present disclosure contains a polycarbonate resin (A), a flow improver (B) containing a first polymer (b1), and a core-shell elastic material (C). The resin composition may further contain a modifier (D) containing a third polymer (d1) and/or a flame retardant (E).

### <Polycarbonate Resin (A)>

The polycarbonate resin (A) can be a commonly used polycarbonate resin. For example, the polycarbonate resin used can be a polycarbonate resin produced by a method in which a dihydric phenol and a carbonyl halide or the like are subjected to interfacial polycondensation or a method in which a dihydric phenol and a carbonic diester or the like are subjected to melt polymerization (transesterification).

Examples of the dihydric phenol include 4,4'-dihydroxybiphenyl, bis(4-hydroxyphenyl)methane, 1,1-bis(4-hydroxyphenyl)ethane, 2,2-bis(4-hydroxyphenyl)propane, 2,2-bis(3-methyl-4-hydroxyphenyl)propane, 2,2-bis(3,5-dimethyl-4-hydroxyphenyl)propane, 1,1-bis(4-hydroxyphenyl)cyclohexane, bis(4-hydroxyphenyl) ether, bis(4-hydroxyphenyl) sulfide, bis(4-hydroxyphenyl) sulfone, bis(4-hydroxyphenyl) sulfoxide, bis(4-hydroxyphenyl) ketone, hydroquinone, resorcinol, and catechol. Among these, bis(hydroxyphenyl)alkanes are preferred and 2,2-bis(4-hydroxyphenyl)propane is particularly preferred.

Examples of carbonate precursors include carbonyl halides, carbonyl esters, and haloformates. Specific examples include: phosgene; diaryl carbonates such as dihalofonnates of dihydric phenols, diphenyl carbonate, ditolyl carbonate, bis(chlorophenyl) carbonate, and *m*-cresyl carbonate; and aliphatic carbonate compounds such as dimethyl carbonate, diethyl carbonate, diisopropyl carbonate, dibutyl carbonate, diamyl carbonate, and dioctyl carbonate.

The polycarbonate resin may be a resin having a polymer chain whose molecular structure is linear or branched. Examples of a branching agent for introducing a branched structure include 1,1,1-tris(4-hydroxyphenyl)ethane, α,α',α"-tris(4-hydroxyphenyl)-1,3,5-triisopropylbenzene, phloroglucinol, trimellitic acid, and isatin bis(o-cresol). In addition, phenol, *p*-*t*-butylphenol, *p*-*t*-octylphenol, or *p*-cumylphenol can be used as a molecular weight regulator.

The polycarbonate resin may be a polymer produced using only the dihydric phenol and carbonate precursor as described above and having only polycarbonate structural units. Alternatively, the polycarbonate resin may be a copolymer having polycarbonate structural units and polyorganosiloxane structural units or may be a resin composition containing the polymer and the copolymer. The polycarbonate resin may be a polyester-polycarbonate resin obtained by a polymerization reaction of a dihydric phenol etc. in the presence of a difunctional carboxylic acid such as terephthalic acid or an ester-forming precursor of the difunctional carboxylic acid.

### <Flow Improver (B)>

The polycarbonate resin composition according to the present disclosure contains a flow improver (B). The flow improver (B) contains at least a first polymer (b1). The flow improver (B) according to a preferred aspect preferably contains a second polymer (b2) in addition to the first polymer (b1) because the presence of the second polymer (b2) can offer good granulation properties during production.

### [First Polymer (b1)]

The first polymer (b I) contains 50 to 70 wt% of an aromatic vinyl compound, 5 to 20 wt% of a vinyl cyanide compound, and 10 to 45 wt% of another copolymerizable vinyl compound as constituent monomers based on 100 wt% of the total first polymer (b1). The content of the aromatic vinyl compound is preferably from 55 to 70 wt%, the content of the vinyl cyanide compound is preferably from 7 to 20 wt%, and the content of the other copolymerizable vinyl compound is preferably from 10 to 38 wt%. Thanks to the fact that the first polymer (b1) contains the aromatic vinyl compound and the vinyl cyanide compound in the above proportions, the polycarbonate resin composition provided can have a good balance of melt fluidity, impact resistance, and heat resistance.

Examples of the aromatic vinyl compound include styrene, α-methylstyrene, p-methylstyrene, monobromostyrene, dibromostyrene, tribromostyrene, and chlorostyrene, and styrene is preferred. One of these compounds may be used alone, or two or more thereof may be used in combination.

Examples of the vinyl cyanide compound include acrylonitrile and methacrylonitrile, and acrylonitrile is preferred. One of these compounds may be used alone, or two or more thereof may be used in combination.

Examples of the other copolymerizable vinyl compound include: linear alkyl (meth)acrylates containing a linear alkyl group having 1 to 20 carbon atoms, such as methyl (meth)acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, and hexadecyl (meth)acrylate; branched alkyl (meth)acrylates containing a branched alkyl group having 3 to 20 carbon atoms, such as isopropyl (meth)acrylate, isobutyl (meth)acrylate, s-butyl (meth)acrylate, t-butyl (meth)acrylate, isopentyl (meth)acrylate, 2-ethylhexyl (meth)acrylate, isooctyl (meth)acrylate, isononyl (meth)acrylate, isodecyl (meth)acrylate, isoundecyl (meth)acrylate, isododecyl (meth)acrylate, isotridecyl (meth)acrylate, isotetradecyl (meth)acrylate, isopentadecyl (meth)acrylate, isohexadecyl (meth)acrylate, isoheptadecyl (meth)acrylate, and isooctadecyl (meth)acrylate; cyclic alkyl (meth)acrylates containing a cyclic alkyl group having 3 to 20 carbon atoms, such as cyclopropyl (meth)acrylate, cyclobutyl (meth)acrylate, cyclopentyl (meth)acrylate, cyclohexyl (meth)acrylate, cyclooctyl (meth)acrylate, and cyclodecyl (meth)acrylate; aryl (meth)acrylates such as phenyl (meth)acrylate and methylphenyl (meth)acrylate; aralkyl (meth)acrylates such as benzyl (meth)acrylate; unsaturated acid anhydrides such as maleic anhydride, itaconic anhydride, and citraconic anhydride; unsaturated acids such as acrylic acid and methacrylic acid; α,β-unsaturated dicarboxylic acid imide compounds such as maleimide, *N*-methylmaleimide, *N*-butylmaleimide, *N*-(*p*-methylphenyl)maleimide, *N*-phenylmaleimide, and *N*-cyclohexylmaleimide; epoxy group-containing unsaturated compounds such as glycidyl (meth)acrylate and allyl glycidyl ether; unsaturated carboxylic acid amides such as acrylamide and methacrylamide; amino group-containing unsaturated compounds such as acrylamine, aminomethyl (meth)acrylate, aminoethyl (meth)acrylate, aminopropyl (meth)acrylate, and aminostyrene; hydroxy group-containing unsaturated compounds such as 3-hydroxy-I-propene, 4-hydroxy-1-butene, cis-4-hydroxy-2-butene, *trans*-4-hydroxy-2-butene, 3-hydroxy-2-methyl-1-propene, 2-hydroxyethyl acrylate, 2-hydroxyethyl methacrylate, and hydroxystyrene; and oxazoline group-containing unsaturated compounds such as vinyl oxazoline. One of these compounds may be used alone, or two or more thereof may be used in combination.

The first polymer (bl) has a weight-average molecular weight of 15,000 to 120,000. Thanks to the fact that the weight-average molecular weight of the first polymer (b1) is 120,000 or less, the polycarbonate resin composition provided can have a good balance of melt fluidity, impact resistance, and heat resistance. The weight-average molecular weight is more preferably 100,000 or less, even more preferably 80,000 or less, and particularly preferably 60,000 or less. If the weight-average molecular weight of the first polymer (b1) is extremely low, the first polymer (b1) has a lowered melting onset temperature and poor handleability. From this viewpoint, the weight-average molecular weight is preferably 20,000 or more, more preferably 25,000 or more, and even more preferably 30,000 or more.

### [Second Polymer (b2)]

The second polymer (b2) is an optional component and need not be contained. When the flow improver (B) contains the second polymer (b2), the second polymer (b2) is preferably present outside the first polymer (b1) and covers the first polymer (b1). Preferably, the first polymer (b1) and the second polymer (b2) are not chemically bonded to each other.

When the flow improver (B) contains the second polymer (b2), the second polymer (b2) preferably contains 10 to 90 wt% of an alkyl methacrylate and 10 to 90 wt% of another copolymerizable vinyl compound as constituent monomers based on 100 wt% of the total second polymer (b2). When the proportion of the alkyl methacrylate in the second polymer (b2) is relatively high, the Tg (glass transition temperature) of the second polymer (b2) can be high as described later, and thus the granulation properties of the flow improver (B) can be improved.

The second polymer (b2) more preferably contains 50 to 90 wt% of the alkyl methacrylate and 10 to 50 wt% of the other copolymerizable vinyl compound as constituent monomers, even more preferably contains 60 to 90 wt% of the alkyl methacrylate and 10 to 40 wt% of the other copolymerizable vinyl compound as constituent monomers, and particularly preferably contains 70 to 90 wt% of the alkyl methacrylate and 10 to 30 wt% of the other copolymerizable vinyl compound as constituent monomers, based on 100 wt% of the total second polymer (b2). The other vinyl compound used can be any of the compounds mentioned as examples for the first polymer (b1) described above.

Examples of the alkyl methacrylate include: linear alkyl methacrylates containing a linear alkyl group having 1 to 20 carbon atoms, such as methyl methacrylate, ethyl methacrylate, propyl methacrylate, butyl methacrylate, pentyl methacrylate, hexyl methacrylate, heptyl methacrylate, octyl methacrylate, nonyl methacrylate, decyl methacrylate, undecyl methacrylate, dodecyl methacrylate, tridecyl methacrylate, tetradecyl methacrylate, pentadecyl methacrylate, hexadecyl methacrylate, and octadecyl methacrylate; branched alkyl methacrylates containing a branched alkyl group having 3 to 20 carbon atoms, such as isopropyl methacrylate, isobutyl methacrylate, s-butyl methacrylate, t-butyl methacrylate, isopentyl methacrylate, 2-ethylhexyl methacrylate, isooctyl methacrylate, isononyl methacrylate, isodecyl methacrylate, isoundecyl methacrylate, isododecyl methacrylate, isotridecyl methacrylate, isotetradecyl methacrylate, isopentadecyl methacrylate, isohexadecyl methacrylate, isoheptadecyl methacrylate, and isooctadecyl methacrylate; and cyclic alkyl methacrylates containing a cyclic alkyl group having 3 to 20 carbon atoms, such as cyclopropyl methacrylate, cyclobutyl methacrylate, cyclopentyl methacrylate, cyclohexyl methacrylate, cyclooctyl methacrylate, and cyclodecyl methacrylate. One of these alkyl methacrylates may be used alone, or two or more thereof may be used in combination.

The number of carbon atoms in the alkyl group of the alkyl methacrylate is preferably from 1 to 14, more preferably from 1 to 12, even more preferably from 1 to 10, still even more preferably from 1 to 8, and particularly preferably from 1 to 6. Among the alkyl methacrylates listed above, the linear alkyl methacrylates are more preferred, and methyl methacrylate and ethyl methacrylate are even more preferred.

When the second polymer (b2) is present outside the first polymer (b1) and has a Tg of 30 to 110°C, the granulation properties of the flow improver (B) can be improved. The Tg of the second polymer (b2) is preferably from 60 to 100°C and more preferably from 35 to 80°C. The Tg may be determined from the Tg values of the monomers based on those Tg values of homopolymers which are indicated in "Polymer Handbook Fourth Edition", authored by J. Brand and published by Wiley in 1998 or may be determined by differential thermal analysis or differential scanning calorimetry.

The weight-average molecular weight of the second polymer (b2) is not limited to a particular range but is preferably from 20,000 to 300,000 and more preferably from 20,000 to 150,000.

When the flow improver (B) contains the second polymer (b2), it is preferable, in terms of the balance of melt fluidity, impact resistance, and heat resistance of the polycarbonate resin composition, that the flow improver (B) should contain 60 to 90 wt% of the first polymer (b1) and 10 to 40 wt% of the second polymer (b2) based on 100 wt% of the total amount of the first polymer (b1) and the second polymer (b2). The flow improver (B) more preferably contains 65 to 85 wt% of the first polymer (b1) and 15 to 35 wt% of the second polymer (b2) and even more preferably contains 70 to 80 wt% of the first polymer (b1) and 20 to 30 wt% of the second polymer (b2).

### [Method for Producing Flow Improver (B]

The flow improver (B) can be obtained, for example, by a polymerization method such as emulsion polymerization or suspension polymerization in which water is used as a medium. This kind of polymerization method is preferred in terms of ease of collection, weak polymer odor, handleability, anti-blocking properties, and economy. In terms of the dispersibility of the flow improver (B) in the polycarbonate resin, emulsion polymerization is more preferred. Emulsion polymerization, soap-free emulsion polymerization, and droplet suspension polymerization, which can give structured particles, are polymerization methods particularly preferred to obtain two or more polymer structures.

The emulsifier used in emulsion polymerization can be a conventionally known emulsifier, and examples include: anionic emulsifiers such as fatty acid salts, alkyl sulfate salts, alkylbenzenesulfonic acid salts, alkyl phosphate salts, and sulfosuccinic diester salts; cationic emulsifiers such as alkylamine salts; and non-ionic emulsifiers such as polyoxyethylene alkyl ethers and polyoxyethylene fatty acid esters. To improve the impact resistance or heat resistance or to inhibit decomposition of the polycarbonate resin and prevent a reduction in impact resistance under hot and humid conditions or a change in color at a high temperature, the emulsifier is preferably a phosphoric acid emulsifier or a sulfonic acid emulsifier and particularly preferably a sulfonic acid emulsifier. One of the emulsifiers as mentioned above may be used alone, or two or more thereof may be used in combination.

Additionally, a polymerization promotor such as disodium ethylenediaminetetraacetate, sodium formaldehyde sulfoxylate, or ferrous sulfate may be used, a latex viscosity modifier such as sodium sulfate may be used, and a pH adjuster such as sodium hydroxide may be used.

The weight-average molecular weight of the first polymer (b1) or the second polymer (b2) can be adjusted by changing the proportions of the monomers contained in the polymer (b1) or (b2). The weight-average molecular weight of the polymer (b 1) or (b2) can be adjusted also by changing other factors such as the amount of a radical initiator used, the amount of a chain transfer agent used as necessary, the polymerization temperature, and the polymerization time.

Examples of the radical initiator that can be used in emulsion polymerization include: organic hydroperoxides such as t-butyl hydroperoxide, cumene hydroperoxide, diisopropylbenzene hydroperoxide, p-menthane hydroperoxide, and t-butyl peroxylaurate; a redox initiator combining an oxidant which is any of the above organic hydroperoxides and a reductant such as a sulfurous acid salt, a hydrogen sulfite, a thiosulfuric acid salt, a salt of a metal in a lower valence state, or sodium formaldehyde sulfoxylate; persulfuric acid salts such as potassium persulfate and ammonium persulfate; azo compounds such as azobisisobutyronitrile, dimethyl 2,2'-azobisisobutyrate, and 2-carbamoyl azoisobutyronitrile; and organic peroxides such as benzoyl peroxide and lauroyl peroxide. In particular, the radical initiator is preferably an organic hydroperoxide and more preferably t-butyl hydroperoxide.

The amount of the radical initiator used (preferably the amount of the radical initiator used in polymerization for producing the first polymer (b1)) may be, for example, from 0.01 to 5.0 parts by weight per 100 parts by weight of the monomers used and is preferably from 0.1 to 3.5 parts by weight and more preferably from 0.5 to 3.0 parts by weight. The greater the amount of the radical initiator is, the lower the weight-average molecular weight tends to be. The smaller the amount of the radical initiator is, the higher the weight-average molecular weight tends to be.

Examples of the chain transfer agent used in emulsion polymerization include: mercaptans such as octyl mercaptan, n-dodecyl mercaptan, t-dodecyl mercaptan, n-hexyl mercaptan, n-hexadecyl mercaptan, *n*-tetradecyl mercaptan, and t-tetradecyl mercaptan; hydrocarbon salts such as tetraethylthiuram sulfide, carbon tetrachloride, ethylene bromide, and pentaphenylethane; terpenes; acrolein; methacrolein; allyl alcohol; 2-ethylhexyl thioglycolate; and α-methylstyrene dimer. In particular, the chain transfer agent is preferably a mercaptan and more preferably *t*-dodecyl mercaptan. One of the chain transfer agents as mentioned above may be used alone, or two or more thereof may be used in combination.

The amount of the chain transfer agent used (preferably the amount of the chain transfer agent used in polymerization for producing the first polymer (b1)) may be typically from 0 to 3 parts by weight per 100 parts by weight of the monomers. When a chain transfer agent is used, the amount of the chain transfer agent may be, for example, from 0.01 to 3 parts by weight and is preferably from 0.1 to 3 parts by weight and more preferably from 0.5 to 2.5 parts by weight.

The polymerization time can be changed depending on the types and amounts of the monomers, the emulsifier, and the radical initiator used and the type and amount of the chain transfer agent used as necessary. The polymerization time may be, for example, from 1 to 50 hours and preferably from 5 to 24 hours.

The polymerization temperature can be adjusted depending on the types and amounts of the monomers, the emulsifier, and the radical initiator used and the type and amount of the chain transfer agent used as necessary. The polymerization temperature may be, for example, from 10 to 90°C and is preferably from 40 to 80°C.

The volume mean diameter of the flow improver (B) in a latex may be, for example, from 0.030 to 0.500 µm. The volume mean diameter can be determined using a particle size analyzer (Nanotrac Wave manufactured by Nikkiso Co., Ltd.).

After the polymerization, the resulting latex containing the flow improver (B) may be processed into a powder, for example, by a coagulation method. Methods that can be used to make the flow improver (B) into a powder include: a method in which the latex resulting from the emulsion polymerization described above is processed by a coagulation method such as salt coagulation or acid coagulation; and a method in which the latex is spray-dried to obtain a powder.

In the coagulation method such as salt coagulation or acid coagulation, the latex may be brought into contact with a coagulant such as an inorganic salt (preferably a divalent inorganic salt, more preferably calcium chloride) or an acid. The coagulation may be followed by other steps such as heat treatment, dehydration, washing, and drying to prepare the flow improver (B).

The amount of the flow improver (B) in the polycarbonate resin composition according to the present embodiment is preferably from 1 to 15 wt% of the total amount of the polycarbonate resin (A) and the flow improver (B). When the amount of the flow improver (B) is 1 wt% or more, the polycarbonate resin composition provided can have a good balance of melt fluidity, impact resistance, and heat resistance. When the amount of the flow improver (B) is 15 wt% or less, in particular, high impact resistance can be achieved. The amount of the flow improver (B) is more preferably from 3 to 14 wt%, even more preferably from 5 to 13 wt%, and particularly preferably from 7 to 12 wt%.

### <Core-Shell Elastic Material (C)>

The resin composition according to the present disclosure contains a core-shell elastic material (C). This makes it possible to achieve high impact resistance.

The core-shell elastic material (C) can be composed of polymer particles formed as a graft copolymer. The core-shell elastic material (C) preferably includes a shell layer and one or more core layers. The shell layer refers to a polymer layer forming the outer surface of each polymer particle and may be called a grafted layer. The core layer refers to a polymer layer located inside the shell layer in the polymer particle and is made of a rubber polymer. The core layer may consist only of one layer or may consist of two or more layers differing in monomer composition. The shell layer, which covers the surface of the core layer, is not limited to covering the entire surface of the core layer and may cover at least a part of the surface of the core layer.

### (Core Layer)

The core layer is made of a rubber polymer. The rubber polymer preferably includes at least one selected from the group consisting of natural rubber, diene rubber, acrylate rubber, and polyorganosiloxane rubber and more preferably includes at least one selected from the group consisting of diene rubber, acrylate rubber, and polyorganosiloxane rubber.

### (Diene Rubber)

The diene rubber is an elastic material containing structural units derived from a diene monomer. The core layer more preferably contains the diene rubber and is particularly preferably the diene rubber because this makes it possible to lower the glass transition temperature of the resulting elastic material, achieve high enhancing effect on the impact resistance of a molded article of the resulting polycarbonate resin composition, and ensure low material cost.

Examples of the diene monomer include 1,3-butadiene, isoprene (2-methyl-1,3-butadiene), and 2-chloro-1,3-butadiene. One of these diene monomers may be used alone, or two or more thereof may be used in combination.

The diene rubber may contain structural units derived from a vinyl monomer other than and copolymerizable with diene monomers.

Examples of the vinyl monomer other than and copolymerizable with diene monomers (such a vinyl monomer may be hereinafter referred to as "vinyl monomer A") include: (a) aromatic vinyl monomers such as styrene, α-methylstyrene, monochlorostyrene, and dichlorostyrene; (b) vinyl carboxylic acids such as acrylic acid and methacrylic acid; (c) alkyl (meth)acrylates such as ethyl acrylate, butyl acrylate, 2-ethylhexyl acrylate, methyl methacrylate, ethyl methacrylate, and butyl methacrylate; (d) hydroxy group-containing vinyl monomers such as 2-hydroxyethyl methacrylate and 4-hydroxybutyl acrylate; (e) glycidyl group-containing vinyl monomers such as glycidyl methacrylate and 4-hydroxybutyl acrylate glycidyl ether; (f) unsaturated nitrile monomers such as acrylonitrile and methacrylonitrile; (g) vinyl halides such as vinyl chloride, vinyl bromide, and chloroprene; (h) vinyl acetate; and (i) alkenes such as ethylene, propylene, butylene, and isobutylene. One of the vinyl monomers A as mentioned above may be used alone, or two or more thereof may be used in combination.

The content of structural units derived from a vinyl monomer A in the diene rubber is not limited to a particular range. The diene rubber preferably contains 50 to 100 wt% of structural units derived from a diene monomer and 0 to 50 wt% of structural units derived from a vinyl monomer A based on 100 wt% of the total structural units.

The diene rubber may further contain structural units derived from a polyfunctional monomer such as diallyl phthalate, triallyl cyanurate, triallyl isocyanurate, divinylbenzene, allyl methacrylate, ethylene glycol dimethacrylate, or 1,3-butylene dimethacrylate. That is, any of these polyfunctional monomers may be used in polymerization for producing the diene rubber.

Suitable examples of the diene rubber include butadiene rubber (polybutadiene rubber), styrene/butadiene copolymer rubber (poly(styrene/butadiene) rubber), poly(acrylonitrile/butadiene) rubber, and butadiene/acrylic ester copolymer rubber. The butadiene rubber is an elastic material containing 50 to 100 wt% of structural units derived from 1,3-butadiene based on 100 wt% of the total structural units.

The diene rubber is preferably butadiene rubber containing 50 to 100 wt% of structural units derived from 1,3-butadiene and 0 to 50 wt% of structural units derived from a vinyl monomer A and more preferably 1,3-butadiene homopolymer containing 100 wt% of structural units derived from 1,3-butadiene.

The core layer preferably contains butadiene rubber or styrene/butadiene copolymer rubber because this makes it possible to lower the glass transition temperature of the resulting elastic material, achieve high enhancing effect on the impact resistance of a molded article of the resulting polycarbonate resin composition, and ensure low material cost.

### (Acrylate Rubber)

The acrylate rubber is an elastic material containing structural units derived from a (meth)acrylate monomer.

Examples of the (meth)acrylate monomer include: (a) (meth)acrylic alkyl esters containing an alkyl group having 1 to 22 carbon atoms, such as methyl (meth)acrylate, ethyl (meth)acrylate, propyl (meth)acrylate, butyl (meth)acrylate, 2-ethylhexyl (meth)acrylate, octyl (meth)acrylate, dodecyl (meth)acrylate, stearyl (meth)acrylate, and behenyl (meth)acrylate; (b) aromatic ring-containing (meth)acrylic esters such as phenoxyethyl (meth)acrylate and benzyl (meth)acrylate; (c) (meth)acrylic hydroxyalkyl esters such as 2-hydroxyethyl (meth)acrylate and 4-hydroxybutyl (meth)acrylate; (d) glycidyl group-containing (meth)acrylic esters such as glycidyl (meth)acrylate and glycidyl alkyl (meth)acrylates; and (e) (meth)acrylic alkoxyalkyl esters. One of these (meth)acrylate monomers may be used alone, or two or more thereof may be used in combination.

The acrylate rubber may further contain structural units derived from a vinyl monomer other than and copolymerizable with (meth)acrylate monomers. Examples of the vinyl monomer other than and copolymerizable with (meth)acrylate monomers include: (a) diene monomers as mentioned above; and (b) vinyl monomers A other than (meth)acrylate monomers.

The acrylate rubber has a crosslinked structure. To introduce the crosslinked structure, for example, a crosslinking agent and/or grafting agent can be used when a polymer forming the core layer is synthesized by polymerizing a monomer component. Examples of the crosslinking agent and grafting agent include: (a) allyl alkyl (meth)acrylate compounds such as allyl (meth)acrylate and allyl alkyl (meth)acrylates; (b) polyfunctional (meth)acrylates such as monoethylene glycol di(meth)acrylate, triethylene glycol di(meth)acrylate, and tetraethylene glycol di(meth)acrylate; and (c) polyfunctional monomers such as diallyl phthalate, triallyl cyanurate, triallyl isocyanurate, and divinylbenzene. One of these crosslinking agents and grafting agents may be used alone, or two or more thereof may be used in combination.

Suitable examples of the acrylate rubber include poly(butyl acrylate) rubber and butyl acrylate/2-ethylhexyl acrylate copolymer rubber. The poly(butyl acrylate) rubber is an elastic material containing 50 to 100 wt% of structural units derived from butyl acrylate based on 100 wt% of the total structural units.

Suitable examples of the polyorganosiloxane rubber include silicone rubber and silicone/acrylate rubber.

Examples of the silicone rubber include poly(methyl silicone) rubber and poly(methylphenyl silicone) rubber. Examples of the silicone/acrylate rubber include polyorganosiloxane/butyl acrylate copolymer rubber.

In one embodiment, the core layer preferably contains at least one selected from the group consisting of butadiene rubber, styrene/butadiene copolymer rubber, acrylate rubber, and silicone rubber and more preferably contains butadiene rubber or styrene/butadiene copolymer rubber.

The weight percentage of the core layer in the total core-shell elastic material (C) is preferably from 50 to 99 wt%, more preferably from 60 to 95 wt%, and even more preferably from 70 to 90 wt% in terms of the compatibility of the core-shell elastic material (C) with the polycarbonate resin and in terms of the enhancing effect on impact resistance.

### (Shell Layer)

The shell layer is preferably formed from a polymer containing structural units derived from a vinyl monomer. Examples of the vinyl monomer include an aromatic vinyl compound, a vinyl cyanide compound, an unsaturated carboxylic ester, an acrylamide monomer, and a maleimide monomer.

Suitable examples of the aromatic vinyl compound include styrene, α-methylstyrene, o-methylstyrene, m-methylstyrene, p-methylstyrene, *t*-butylstyrene, α-methyl vinyl toluene, dimethylstyrene, chlorostyrene, dichlorostyrene, bromostyrene, and dibromostyrene.

Suitable examples of the vinyl cyanide compound include acrylonitrile, methacrylonitrile, and ethacrylonitrile.

Suitable examples of the unsaturated carboxylic ester include: (a) acrylic alkyl esters containing an alkyl group having 1 to 22 carbon atoms, such as methyl acrylate, ethyl acrylate, propyl acrylate, butyl acrylate, 2-ethylhexyl acrylate, octyl acrylate, dodecyl acrylate, stearyl acrylate, and behenyl acrylate; (b) methacrylic alkyl esters containing an alkyl group having 1 to 22 carbon atoms, such as methyl methacrylate, ethyl methacrylate, propyl methacrylate, butyl methacrylate, 2-ethylhexyl methacrylate, octyl methacrylate, dodecyl methacrylate, stearyl methacrylate, and behenyl methacrylate; and (c) (meth)acrylic alkoxyalkyl esters containing an alkoxy group and an alkyl group having 1 to 22 carbon atoms, such as methoxymethyl (meth)acrylate, methoxyethyl (meth)acrylate, ethoxymethyl (meth)acrylate, and ethoxyethyl (meth)acrylate.

Suitable examples of the acrylamide monomer include acrylamide, methacrylamide, and *N*-methylacrylamide.

Suitable examples of the maleimide monomer include N-methylmaleimide, *N*-ethylmaleimide, *N*-isopropylmaleimide, *N*-butylmaleimide, *N*-hexylmaleimide, *N*-octylmaleimide, *N*-dodecylmaleimide, *N*-cyclohexylmaleimide, and *N*-phenylmaleimide.

The polymer forming the shell layer preferably contains, as a constituent monomer, at least one selected from the group consisting of methyl methacrylate, styrene, and butyl acrylate. One of these monomers may be used alone, or two or more thereof may be used in combination.

The polymer forming the shell layer may further contain, as a constituent monomer, at least one reactive vinyl monomer selected from the group consisting of a carboxy group-containing vinyl monomer, a hydroxy group-containing vinyl monomer, and a glycidyl group-containing vinyl monomer. The shell layer containing the reactive vinyl monomer as a constituent monomer can render the core-shell elastic material (C) reactive with the polycarbonate resin, thus providing an improvement in the dispersibility of the core-shell elastic material (C) in the polycarbonate resin and an increase in the enhancing effect on impact resistance. Among the reactive vinyl monomers as mentioned above, the carboxy group-containing vinyl monomer is preferred due to its especially high reactivity with the polycarbonate resin. One of the reactive vinyl monomers as mentioned above may be used alone, or two or more thereof may be used in combination.

Suitable examples of the carboxy group-containing vinyl monomer include acrylic acid, methacrylic acid, crotonic acid, maleic acid, itaconic acid, fumaric acid, isocrotonic acid, vinyloxyacetic acid, allyloxyacetic acid, 2-(meth)acryloylpropanoic acid, 3-(meth)acryloylbutanoic acid, 4-vinylbenzoic acid, 2-methacryloyloxyethyl succinic acid, 2-methacryloyloxyethyl maleic acid, 2-methacryloyloxyethyl phthalic acid, and 2-methacryloyloxyethyl hexahydrophthalic acid. Among these, acrylic acid and/or methacrylic acid is preferred and methacrylic acid is more preferred.

Suitable examples of the hydroxy group-containing vinyl monomer include (meth)acrylic hydroxyalkyl esters containing a hydroxy group and an alkyl group having 1 to 22 carbon atoms, such as hydroxymethyl (meth)acrylate, 2-hydroxyethyl (meth)acrylate, 2-hydroxypropyl (meth)acrylate, 2-hydroxybutyl (meth)acrylate, and 4-hydroxybutyl (meth)acrylate.

Suitable examples of the glycidyl group-containing vinyl monomer include glycidyl (meth)acrylate.

The amount of the reactive vinyl monomer used can be chosen as appropriate depending on the desired effect and is not limited to a particular range. When the reactive vinyl monomer is a carboxy group-containing vinyl monomer, the proportion of the carboxy group-containing vinyl monomer in the total polymer particles serving as the core-shell elastic material (C) may be, for example, from 0.01 to 5 wt%.

The weight percentage of the shell layer in the total core-shell elastic material (C) is preferably from 1 to 50 wt%, more preferably from 5 to 40 wt%, and even more preferably from 10 to 30 wt% in terms of the compatibility of the core-shell elastic material (C) with the polycarbonate resin and in terms of the enhancing effect on impact resistance.

### [Particle Diameter of Core-Shell Elastic Material (C)]

The particle diameter of the core-shell elastic material (C) formed as polymer particles can be chosen as appropriate. The volume mean diameter of the core-shell elastic material (C) is preferably 100 nm or more. An increased particle diameter tends to lead to enhanced impact resistance; thus, the volume mean diameter is preferably 150 nm or more, more preferably 200 nm or more, and even more preferably 250 nm or more. However, an increase in the particle diameter of the polymer particles tends to lead to an increase in the time required for the polymerization reaction and a reduction in productivity; thus, the volume mean diameter is preferably 700 nm or less and more preferably 500 nm or less.

The volume mean diameter of the polymer particles is measured, as described in Examples, by subjecting a latex of the polymer particles to measurement using a particle diameter measurement device. Alternatively, the volume mean diameter of the polymer particles can be determined based on a transmission electron microscope (TEM) image of the polycarbonate resin composition. The particle diameter of the polymer particles can be controlled by factors such as: the types and amounts of the polymerization initiator, the chain transfer agent, the redox agent, and the emulsifier; the polymerization temperature; and the polymerization time.

### [Method for Producing Core-Shell Elastic Material (C)]

The method for producing the core-shell elastic material (C) is not limited to using a particular technique and may be an ordinary method. For example, bulk polymerization, solution polymerization, suspension polymerization, or emulsion polymerization may be used. Emulsion polymerization, in particular emulsion graft polymerization, is preferred. Specifically, in the emulsion graft polymerization, a latex of particles serving as the core layers is first produced by emulsion polymerization, and a monomer component for forming the shell layers and a polymerization initiator etc. are added to the latex, in which the monomer component is polymerized.

A known method for efficiently producing the core-shell elastic material (C) having a relatively large particle diameter by an ordinary emulsion polymerization method is to add a water-soluble electrolyte or an acid group-containing copolymer latex and expand the particles before or during graft polymerization. A method using a water-soluble electrolyte for particle expansion is disclosed, for example, in Japanese Laid-Open Patent Application Publication No. H4-170458 or Japanese Laid-Open Patent Application Publication No. S60-192754. A method using an acid group-containing copolymer latex for particle expansion is disclosed, for example, in Japanese Laid-Open Patent Application Publication No. H10-245468 or Japanese Laid-Open Patent Application Publication No. H8-12704.

### [Amount of Core-Shell Elastic Material (C)]

The amount of the core-shell elastic material (C) in the polycarbonate resin composition according to the present embodiment is preferably from 1 to 30 parts by weight per 100 parts by weight of the total amount of the polycarbonate resin (A) and the flow improver (B). When the amount of the core-shell elastic material (C) is within the above range, the polycarbonate resin composition provided can have a good balance of melt fluidity, impact resistance, and heat resistance. The amount of the core-shell elastic material (C) is more preferably from 3 to 25 parts by weight and even more preferably from 5 to 20 parts by weight.

### <Modifier (D)>

The polycarbonate resin composition according to the present embodiment may further contain, in addition to the flow improver (B) containing the first polymer (b1), a modifier (D) containing a third polymer (dl). The third polymer (d1) is a polymer having a higher molecular weight than the first polymer (b1).

If the modifier (D) is added without the flow improver (B), sufficient melt fluidity or heat resistance cannot be achieved, and it is difficult to obtain a polycarbonate resin composition having a good balance of melt fluidity, impact resistance, and heat resistance. In contrast, the addition of the modifier (D) together with the flow improver (B) makes it possible to obtain a polycarbonate resin composition having a good balance of melt fluidity, impact resistance, and heat resistance and can in particular enhance the impact resistance more than the use of the flow improver (B) alone.

The modifier (D) contains at least the third polymer (dl). The modifier (D) according to a preferred aspect preferably contains a fourth polymer (d2) in addition to the third polymer (d1) since the presence of the fourth polymer (d2) can offer good granulation properties during production.

The third polymer (d1) may be any polymer of a vinyl compound and/or a (meth)acrylate monomer and is not limited to having a particular monomer composition. Specific examples of the monomer composition of the third polymer (d1) are described below.

In one aspect, the third polymer (d1) may contain 50 to 70 wt% of an aromatic vinyl compound, 5 to 20 wt% of a vinyl cyanide compound, and 10 to 45 wt% of another copolymerizable vinyl compound as constituent monomers based on 100 wt% of the total third polymer (d1). This monomer composition is the same as that of the first polymer (b1) and will therefore not be described below.

In another aspect, the third polymer (d1) may contain 50 to 99 wt% of an alkyl methacrylate and 1 to 50 wt% of another copolymerizable vinyl compound as constituent monomers based on 100 wt% of the total third polymer (d1). This monomer composition is the same as that of the second polymer (b2) and will therefore not be described below.

The weight-average molecular weight of the third polymer (dl) is higher than that of the first polymer (b1) and preferably from 150,000 to 7,000,000. The weight-average molecular weight of the third polymer (d1) is more preferably from 200,000 to 4,000,000 and even more preferably from 250,000 to 1,500,000.

When the modifier (D) contains the fourth polymer (d2), the fourth polymer (d2) preferably covers the third polymer (d1) and preferably contains 50 to 90 wt% of an alkyl methacrylate and 10 to 50 wt% of another copolymerizable vinyl compound as constituent monomers based on 100 wt% of the total fourth polymer (d2). The monomer composition and weight-average molecular weight of the fourth polymer (d2) are the same as those of the second polymer (b2) and will therefore not be described below.

When the modifier (D) contains the fourth polymer (d2), it is preferable, in terms of the balance of melt fluidity, impact resistance, and heat resistance of the polycarbonate resin composition, that the modifier (D) should contain 60 to 90 wt% of the third polymer (d1) and 10 to 40 wt% of the fourth polymer (d2) based on 100 wt% of the total amount of the third polymer (dl) and the fourth polymer (d2). The modifier (D) more preferably contains 65 to 85 wt% of the third polymer (d1) and 15 to 35 wt% of the fourth polymer (d2) and even more preferably contains 70 to 85 wt% of the third polymer (dl) and 15 to 30 wt% of the fourth polymer (d2).

The modifier (D) can be produced in the same manner as the flow improver (B). Examples of commercially-available products that can be used as the modifier (D) include KaneAce^{™} PA-20 (manufactured by Kaneka Corporation), KaneAce^{™} PA-40 (manufactured by Kaneka Corporation), KaneAce^{™} PA-80 (manufactured by Kaneka Corporation), PA-310 (manufactured by Kaneka Corporation), and Blendex 864 (manufactured by Galata Chemicals).

The amount of the modifier (D) in the polycarbonate resin composition according to the present embodiment is not limited to a particular range and can be chosen as appropriate. The weight ratio of the flow improver (B) to the modifier (D) is preferably from 99:1 to 50:50, more preferably from 97:3 to 60:40, and even more preferably from 95:5 to 70:30.

### <Flame Retardant (E)>

The polycarbonate resin composition according to the present disclosure may contain no flame retardant or may further contain a flame retardant (E). The polycarbonate resin composition containing the flame retardant (E) can be provided as one having high flame retardancy.

The flame retardant used can be any of various flame retardants known as those added to thermoplastic resins. Examples include, but are not limited to, flame retardants mentioned in "Flame Retardant Technology of Polymeric Materials" (pp. 149-221) published by CMC Publishing Co., Ltd.

Particular examples of the flame retardant include: halogen flame retardants including bromine flame retardants such as tetrabromobisphenol A and decabromodiphenyl oxide and chlorine flame retardants such as chlorinated paraffin and chlorinated polyethylene; phosphorus flame retardants such as non-halogenated phosphoric ester flame retardants (monophosphates/condensed phosphates), halogen-containing phosphoric ester flame retardants (monophosphates/condensed phosphates), inorganic phosphoric acid salt flame retardants, and red phosphorus flame retardants; inorganic flame retardants such as antimony trioxide, aluminum hydroxide, and magnesium hydroxide; organic salt flame retardants; and silicone flame retardants. One of these flame retardants may be used alone, or two or more thereof may be used in combination.

Examples of preferred flame retardants include: halogenated bisphenols A; halogenated polycarbonate oligomers; halogenated bisphenol A polycarbonate flame retardants; halogen flame retardants combining a halogen compound such as a brominated epoxy compound and a flame retardant aid such as antimony oxide; organic salt flame retardants; phosphorus flame retardants such as aromatic phosphoric ester flame retardants and halogenated aromatic phosphoric ester flame retardants; and silicone flame retardants such as organopolysiloxanes such as branched phenyl silicone compounds and phenyl silicone resins.

Examples of the halogenated bisphenol A polycarbonate flame retardants include a tetrabromobisphenol A polycarbonate flame retardant and a tetrabromobisphenol A-bisphenol A copolycarbonate flame retardant.

Examples of the organic salt flame retardants include dipotassium diphenylsulfone-3,3'-disulfonate, potassium diphenylsulfone-3-sulfonate, sodium 2,4,5-trichlorobenzenesulfonate, potassium 2,4,5-trichlorobenzenesulfonate, potassium bis(2,6-dibromo-4-cumylphenyl) phosphate, sodium bis(4-cumylphenyl) phosphate, potassium bis(p-toluenesulfone) imide, potassium bis(diphenyl phosphate) imide, potassium bis(2,4,6-tribromophenyl) phosphate, potassium bis(2,4-dibromophenyl) phosphate, potassium bis(4-bromophenyl) phosphate, potassium diphenyl phosphate, sodium diphenyl phosphate, potassium perfluorobutanesulfonate, sodium lauryl sulfate, potassium lauryl sulfate, sodium hexadecyl sulfate, and potassium hexadecyl sulfate.

Examples of the halogenated aromatic phosphoric ester flame retardants include tris(2,4,6-tribromophenyl) phosphate, tris(2,4-dibromophenyl) phosphate, and tris(4-bromophenyl) phosphate.

Examples of the aromatic phosphoric ester flame retardants include triphenyl phosphate, tris(2,6-xylyl) phosphate, tetrakis(2,6-xylyl) resorcinol diphosphate, tetrakis(2,6-xylyl) hydroquinone diphosphate, tetrakis(2,6-xylyl)-4,4'-biphenol diphosphate, tetraphenyl resorcinol diphosphate, tetraphenyl hydroquinone diphosphate, tetraphenyl-4,4'-biphenol diphosphate, an aromatic polyphosphate that has aromatic rings sourced from resorcinol and phenol and that does not contain any phenolic hydroxy group (OH group), an aromatic polyphosphate that has aromatic rings sourced from resorcinol and phenol and that contains a phenolic OH group, an aromatic polyphosphate that has aromatic rings sourced from hydroquinone and phenol and that does not contain any phenolic OH group, an aromatic polyphosphate that has aromatic rings sourced from hydroquinone and phenol and that contains a phenolic OH group (the term "aromatic polyphosphate" as used hereinafter is intended to include both an aromatic polyphosphate that contains a phenolic OH group and an aromatic polyphosphate that does not contain any phenolic OH group), an aromatic polyphosphate having aromatic rings sourced from bisphenol A and phenol, an aromatic polyphosphate having aromatic rings sourced from tetrabromobisphenol A and phenol, an aromatic polyphosphate having aromatic rings sourced from resorcinol and 2,6-xylenol, an aromatic polyphosphate having aromatic rings sourced from hydroquinone and 2,6-xylenol, an aromatic polyphosphate having aromatic rings sourced from bisphenol A and 2,6-xylenol, and an aromatic polyphosphate having aromatic rings sourced from tetrabromobisphenol A and 2,6-xylenol.

The amount of the flame retardant (E) is preferably from 1 to 80 parts by weight, more preferably from 5 to 60 parts by weight, and particularly preferably from 10 to 40 parts by weight per 100 parts by weight of the total amount of the polycarbonate resin (A) and the flow improver (B) in terms of ensuring both high flame retardancy and high impact resistance. The composition of the polycarbonate resin composition according to the present embodiment can offer higher flame retardancy than any conventional composition, thus allowing for a reduction in the amount of the flame retardant. Reducing the amount of the flame retardant can be expected to further enhance the impact resistance or heat resistance.

### <Anti-dripping Agent>

The polycarbonate resin composition according to the present embodiment may contain an anti-dripping agent in order to prevent melt dripping during combustion. An example of the anti-dripping agent is a fluoroolefin resin material composed mainly of a fluoroolefin resin. The fluoroolefin resin is a polymer, copolymer, or composite containing a fluoroethylene structure. Examples of the fluoroolefin resin include a difluoroethylene polymer, a tetrafluoroethylene polymer, a tetrafluoroethylene-hexafluoropropylene copolymer, a copolymer of tetrafluoroethylene and an ethylene monomer containing no fluorine, and a composite of a tetrafluoroethylene polymer and a vinyl resin such as an acrylic resin. Among these, polytetrafluoroethylene (PTFE) is preferred. The weight-average molecular weight of polytetrafluoroethylene is preferably 500,000 or more and particularly preferably from 500,000 to 10,000,000.

A polytetrafluoroethylene compound having fibril-forming ability is preferred to impart enhanced anti-melt dripping performance. Examples of the polytetrafluoroethylene compound having fibril-forming ability include compounds classified as Type 3 in the ASTM standards. Examples of the polytetrafluoroethylene compounds classified as Type 3 include: Teflon^{™} 6-J (manufactured by Du Pont-Mitsui Fluorochemicals Company, Ltd.); Polyflon D-1, Polyflon F-103, and Polyflon F201 (manufactured by Daikin Industries, Ltd.); and CD1 and CD076 (manufactured by Asahi ICI Fluoropolymers Co., Ltd.).

Examples of polytetrafluoroethylene compounds other than those classified as Type 3 include: Algoflon F5 (manufactured by Montefluos); and Polyflon MPA and Polyflon FA-100 (manufactured by Daikin Industries, Ltd.). One of the polytetrafluoroethylene compounds as mentioned above may be used alone, or two or more thereof may be used in combination.

The amount of the anti-dripping agent is preferably from 0.05 to 5 parts by weight and more preferably from 0.1 to 2 parts by weight per 100 parts by weight of the total amount of the polycarbonate resin (A) and the flow improver (B) in terms of preventing melt dripping during combustion and at the same time ensuring high impact resistance. The amount of the anti-dripping agent can be chosen as appropriate according to the level of flame retardancy required of molded articles, such as V-0, V-1, or V-2 specified in the UL 94, and in view of factors such as the amounts of the other components.

### <Other Resins>

The polycarbonate resin composition according to the present embodiment may contain no thermoplastic resin other than the polycarbonate resin (A) or may contain a thermoplastic resin other than the polycarbonate resin (A). When the polycarbonate resin composition contains a thermoplastic resin other than the polycarbonate resin, examples of the thermoplastic resin include, but are not limited to, polyethylene, polypropylene, polyvinyl chloride, polystyrene, polyvinyl acetate, polyurethane, polytetrafluoroethylene, an ABS resin, an AS resin, an acrylic resin, polyacetal, polyester, modified polyphenylene ether, polyamide, and cyclic polyolefin. The amount of the other thermoplastic resin is not limited to a particular range. The amount of the other thermoplastic resin is, for example, from 0 to 100 parts by weight, preferably from 0 to 50 parts by weight, more preferably from 0 to 30 parts by weight, even more preferably from 0 to 10 parts by weight, and particularly preferably from 0 to 5 parts by weight per 100 parts by weight of the polycarbonate resin (A).

### <Other Additives>

The polycarbonate resin composition according to the present embodiment may, as appropriate, contain additives that can be added to common thermoplastic resin compositions. Examples of the additives include, but are not limited to, a reinforcement, a filler, an antioxidant, a pigment, a dye, an electrically conductive additive, a hydrolysis inhibitor, a thickener, a plasticizer, a lubricant, an ultraviolet absorber, an antistatic agent, a flow improver, a mold release, a compatibilizer, and a thermal stabilizer.

### <Method for Producing Resin Composition>

Production of the polycarbonate resin composition according to the present embodiment is not limited to using a particular method and can be accomplished by a known method. For example, the polycarbonate resin composition can be produced by a known method that uses a device such as a Henschel mixer, a Banbury mixer, a single-screw extruder, a twin-screw extruder, a two-roll mill, a kneader, or a Brabender mixer to blend the components and melt and knead the blend. To prevent the resin composition from turning yellow due to thermal degradation of the polycarbonate resin or any other cause, the temperature during melting and kneading is preferably as low as possible.

### <Molded Article and Uses>

The polycarbonate resin composition according to the present embodiment can be molded into a molded article having a given shape.

Specifically, extrusion molding of the polycarbonate resin composition can produce various shapes of molded articles such as various shapes of extrusion-molded articles and extrusion-molded sheets or films. Examples of extrusion molding methods include: cold runner or hot runner molding methods; and injection molding methods such as injection compression molding, injection press molding, gas-assisted injection molding, foam molding (including that which involves injection of a supercritical fluid), insert molding, in-mold coating, adiabatic molding, rapid heating and cooling molding, two-color molding, sandwich molding, and ultra-high-speed injection molding. Blown film molding, calendering, or casting may be used to mold the composition into a sheet or a film. It is also possible to mold the composition into a heat-shrinkable tube by subjecting the composition to a specific stretching operation. In addition, the composition can be molded by a method such as rotational molding or blow molding to obtain a hollow molded article.

A molded article made of the polycarbonate resin composition according to the present embodiment can be used as any of a wide range of products such as various kinds of housings, hard coat products, glazing materials, light diffuser plates, optical disk substrates, light guide plates, medical materials, and miscellaneous goods. Specific examples include exterior materials for OA equipment or household electric appliances, various kinds of containers, and miscellaneous goods, and more specific examples include: exterior materials for personal computers, laptop computers, gaming consoles, display devices (such as CRT displays, liquid crystal displays, plasma displays, projectors, and organic EL displays), computer mice, printers, copiers, scanners, or facsimile machines (including multifunctional printers); and resin products formed as keyboard keys, molded switches, portable information terminals (so-called "PDAs"), mobile phones, portable electronic books (such as dictionaries), portable televisions, drives of recording media (such as CDs, MDs, DVDs, Blu-ray Discs, and hard disks), readers of recording media (such as IC cards, smart media, and memory sticks), optical cameras, digital cameras, parabolic antennas, electric tools, VTRs, smoothing irons, hair dryers, rice cookers, microwave ovens, audio devices, lighting devices, refrigerators, air conditioners, air purifiers, negative ion generators, or typewriters. The molded article may be a tray, a cup, a dish, a shampoo bottle, an OA housing, a cosmetic bottle, a drink bottle, an oil container, or an injection-molded article (such as a golf tee, a handle of a cotton swab, a bar for a candy, a brush, a toothbrush, a helmet, a syringe, a dish, a cup, a comb, a handle of a razor, a cassette and case for a tape, a disposable spoon or fork, or a stationery product such as a ballpoint pen).

The molded article may be a banding tape (banding band), a prepaid card, a balloon, a pantyhose, a hair cap, a sponge, a cellophane tape, an umbrella, a raincoat, a plastic glove, a hair cap, a rope, a tube, a foamed tray, a foamed cushioning material, a cushioning material, a packing material, or a cigarette filter.

The molded article may be a vehicle part such as a lamp socket, a lamp reflector, a lamp housing, an instrumental panel, a center console panel, a deflector part, a car navigation part, a car audiovisual part, or an automobile computer part.

In the following items, preferred aspects of the present disclosure are listed. The present invention is not limited to the following items.

### [Item 1]

A polycarbonate resin composition containing:
a polycarbonate resin (A);
a flow improver (B) containing a first polymer (b1); and
a core-shell elastic material (C), wherein
an amount of the flow improver (B) is from 1 to 15 wt% of a total amount of the polycarbonate resin (A) and the flow improver (B),
an amount of the core-shell elastic material (C) is from 1 to 30 parts by weight per 100 parts by weight of the total amount of the polycarbonate resin (A) and the flow improver (B),
the first polymer (b1) contains 50 to 70 wt% of an aromatic vinyl compound, 5 to 20 wt% of a vinyl cyanide compound, and 10 to 45 wt% of another copolymerizable vinyl compound as constituent monomers based on 100 wt% of the total first polymer (b1), and
the first polymer (b1) has a weight-average molecular weight of 15,000 to 120,000.

### [Item 2]

The polycarbonate resin composition according to item 1, wherein the flow improver (B) further contains a second polymer (b2) covering the first polymer (bl).

### [Item 3]

The polycarbonate resin composition according to item 2, wherein the second polymer (b2) contains 50 to 90 wt% of an alkyl methacrylate and 10 to 50 wt% of another copolymerizable vinyl compound as constituent monomers based on 100 wt% of the total second polymer (b2).

### [Item 4]

The polycarbonate resin composition according to item 2 or 3, wherein in the flow improver (B), an amount of the first polymer (b1) is from 60 to 90 wt% and an amount of the second polymer (b2) is from 10 to 40 wt%.

### [Item 5]

The polycarbonate resin composition according to any one of items 1 to 4, wherein the core-shell elastic material (C) includes: a core layer containing butadiene rubber or styrene/butadiene copolymer rubber; and a shell layer containing a copolymer containing at least one selected from the group consisting of methyl methacrylate, styrene, and butyl acrylate as a constituent monomer.

### [Item 6]

The polycarbonate resin composition according to any one of items 1 to 5, wherein the flow improver (B) contains a phosphoric acid emulsifier or a sulfonic acid emulsifier.

### [Item 7]

The polycarbonate resin composition according to any one of items 1 to 6, wherein the core-shell elastic material (C) has a volume mean diameter of 100 nm or more.

### [Item 8]

The polycarbonate resin composition according to any one of items 1 to 7, further containing a modifier (D) containing a third polymer (d1), wherein
the third polymer (d1) has a weight-average molecular weight of 150,000 to 7,000,000.

### [Item 9]

The polycarbonate resin composition according to any one of items 1 to 8, further containing a flame retardant (E).

### [Item 10]

A molded article produced by molding the polycarbonate resin composition according to any one of items 1 to 9.

### Examples

Hereinafter, examples of the present invention will be described. The present invention is not limited to these examples.

### [Abbreviations]

AN: Acrylonitrile
St: Styrene
BA: Butyl acrylate
MMA: Methyl methacrylate
GMA: Glycidyl methacrylate
t-DM: t-Dodecyl mercaptan

### [Measurement Methods]

In Production Examples, physical properties etc. were measured according to methods described below.

### <Weight-Average Molecular Weight of Polymer>

The polymer as a measurement object was dissolved in tetrahydrofuran (THF), and the dissolved portion was subjected to gel permeation chromatography (HLC-8220 GPC manufactured by Tosoh Corporation) using polystyrene as a standard sample to determine the weight-average molecular weight of the polymer (sample solution: sample 20 mg/THF 10 mL, measurement temperature: 25°C, detector: differential refractometer, injection volume: 1 mL)

### <Volume Mean Diameter of Core-Shell Elastic Material>

The volume mean diameter of the core-shell elastic material was measured by using a particle size analyzer (Nanotrac Wave manufactured by Nikkiso Co., Ltd.) and examining light scattering of a latex of the core-shell elastic material at a wavelength of 546 nm.

### <Production Example 1>

A stirrer-equipped reactor was charged with 1.0 parts (parts by weight, the same applies hereinafter) of sodium dioctyl sulfosuccinate, 0.0050 parts of disodium ethylenediaminetetraacetate, and 0.0025 parts of ferrous sulfate which were dissolved in water beforehand, and water was added to a total water amount of 200 parts.

The reactor was purged with nitrogen to remove oxygen from the space and water in the reactor. Subsequently, 0.4 parts of sodium formaldehyde sulfoxylate was placed into the stirrer-equipped reactor under stirring, and the reactor contents were heated to 75°C. After that, a mixture of 12.6 parts of acrylonitrile, 43.4 parts of styrene, 6.0 parts of butyl acrylate, 18.0 parts of methyl methacrylate, 0.8 parts of t-dodecyl mercaptan, and 1 part of t-butyl hydroperoxide was continuously added over 200 minutes to effect polymerization. At 50 and 100 minutes after the start of the continuous addition, 0.3 parts of sodium dioctyl sulfosuccinate was added. At 100 minutes after the start of the continuous addition, 0.15 parts of sodium formaldehyde sulfoxylate was also added. In this manner, a first polymer (b1) was formed.

After the end of the polymerization, a mixture of 4 parts of butyl acrylate, 16 parts of methyl methacrylate, and 0.3 parts of *t*-butyl hydroperoxide was continuously added over 50 minutes to effect further polymerization. After the end of the continuous addition, 0.2 parts of sodium formaldehyde sulfoxylate was added.

After the end of the addition of the copolymerization components, the reactor contents were maintained at 75°C and stirred continuously for 1 hour or more to complete the polymerization. In this manner, a second polymer (b2) was formed. After that, the reactor contents were cooled to obtain a latex of a flow improver (B-1).

The obtained latex of the flow improver was coagulated by adding the latex to 5 parts of an aqueous calcium chloride solution diluted to a concentration of 1 wt% at a temperature of 45°C. The coagulation was followed by heat treatment, dehydration, washing, and drying to obtain a powder of the flow improver (B-1) containing the first polymer (b1) with a weight-average molecular weight of 45,000 and the second polymer (b2).

### <Production Example 2>

A powder of a flow improver (B-2) containing a first polymer (b1) with a weight-average molecular weight of 46,000 and a second polymer (b2) was obtained in the same manner as the powder of Production Example 1, except that sodium dodecylbenzenesulfonate was used as an emulsifier.

### <Production Example 3>

A powder of a flow improver (B-3) containing a first polymer (b1) with a weight-average molecular weight of 46,500 and a second polymer (b2) was obtained in the same manner as the powder of Production Example 1, except that sodium polyoxyethylene lauryl ether phosphate was used as an emulsifier.

### <Production Example 4>

A powder of a flow improver (B-4) containing a first polymer (b1) with a weight-average molecular weight of 43,000 and a second polymer (b2) was obtained in the same manner as the powder of Production Example 1, except that sodium polyoxyethylene lauryl ether phosphate was used as an emulsifier and that the monomers used to form the first polymer (b1) were 4.0 parts of acrylonitrile, 52.0 parts of styrene, 6.0 parts of butyl acrylate, and 18.0 parts of methyl methacrylate.

### <Production Example 5>

A powder of a modifier (D-1) containing a third polymer (d1) with a weight-average molecular weight of 300,000 and a fourth polymer (d2) was obtained in the same manner as the powder of Production Example 1, except that t-dodecyl mercaptan was not used and that the monomers used in the second polymerization were 6.0 parts of butyl acrylate and 14.0 parts of methyl methacrylate.

### <Production Example 6>

A powder of a flow improver (B'-2) for comparison was obtained in the same manner as the powder of Production Example 1, except that the monomers used in the first polymerization were 16.0 parts of butyl acrylate and 64.0 parts of methyl methacrylate.

### <Production Example 7>

A powder of a flow improver (B'-3) for comparison was obtained in the same manner as the powder of Production Example 1, except that the monomers used in the first polymerization were 46.4 parts of styrene, 31.2 parts of butyl acrylate, and 2.4 parts of glycidyl methacrylate, that the amount of t-dodecyl mercaptan used was 0.96 parts, and that the monomers used in the second polymerization were 3.0 parts of butyl acrylate and 17.0 parts of methyl methacrylate.

Table 1 shows the types and amounts of the monomers used in Production Examples 1 to 7 and the weight-average molecular weights of the polymers produced in Production Examples 1 to 7. In Table 1, the amounts of the monomers used are indicated as wt% in the polymers.

**[Table 1]**

| | | Prod. 1 | Prod. 2 | Prod. 3 | Prod. 4 | Prod. 5 | Prod. 6 | Prod. 7 |
|---|---|---|---|---|---|---|---|---|
| | | B-1 | B-2 | B-3 | B-4 | D-1 | B'-2 | B'-3 |
| Composition of first polymer | AN | 15.75 | 15.75 | 15.75 | 5 | 15.75 | 0 | 0 |
| | St | 54.25 | 54.25 | 54.25 | 65 | 54.25 | 0 | 58 |
| | BA | 7.5 | 7.5 | 7.5 | 7.5 | 7.5 | 20 | 39 |
| | MMA | 22.5 | 22.5 | 22.5 | 22.5 | 22.5 | 80 | 0 |
| | GMA | 0 | | 0 | 0 | 0 | 0 | 3 |
| | *t*-DM | 1 | 0 1 | 1 | 1 | 0 | 1 | 1.2 |
| Proportion of first polymer | wt% | 80 | 80 | 80 | 80 | 80 | 80 | 80 |
| Molecular weight of first polymer | Weight-average molecular weight | 45,000 | 46,000 | 46,500 | 43,000 | 300,000 | 45,000 | 35,000 |
| Composition of second polymer | MMA | 80 | 80 | 80 | 80 | 70 | 80 | 85 |
| | BA | 20 | 20 | 20 | 20 | 30 | 20 | 15 |
| Proportion of second polymer | wt% | 20 | 20 | 20 | 20 | 20 | 20 | 20 |

### <Production Example 8>

### <Preparation of Polybutadiene Rubber Latex>

A 100-liter pressure-resistant polymerization reactor was charged with 120 parts of water, 0.002 parts of disodium ethylenediaminetetraacetate, 0.0012 parts of ferrous sulfate, and 0.008 parts of disodium ethylenediaminetetraacetate, and the reactor contents were stirred and thoroughly deoxidized. After that, 0.10 parts of sodium polyoxyethylene alkyl ether phosphate, 100 parts of butadiene, 0.3 parts of t-dodecyl mercaptan, 0.05 parts of sodium formaldehyde sulfoxylate, and 0.05 parts of *p*-menthane hydroperoxide were added, and the reactor contents were heated to 50°C to initiate polymerization. Subsequently, 1.4 parts of sodium polyoxyethylene alkyl ether phosphate was added dropwise over 6 hours, after which the reaction solution was maintained at a pH of 6.5 to 7.5 and a temperature of 50°C for 80 hours. As a result, a diene rubber latex with a volume mean diameter of 110 nm was obtained at a conversion rate of 98 wt%.

### <Graft Copolymerization of Polybutadiene>

An 8-liter polymerization reactor was charged with 75 parts (amount of solids) of the rubber latex obtained above, and the rubber latex was heated to 60°C while being stirred under a stream of nitrogen. To the rubber latex was added 0.10 parts of sodium formaldehyde sulfoxylate, and then a graft monomer mixture (8 parts of styrene and 17 parts of methyl methacrylate) to which was added 0.2 parts of *t*-butyl hydroperoxide was continuously added dropwise at a rate of 10 parts/hour by means of a metering pump. After the end of the addition of the monomer mixture, the reactor contents were stirred for another 1 hour to complete polymerization. The polymerization conversion rate was 98% and the mean particle diameter of the resulting latex was 120 nm. To the latex were added 1.5 parts of dilauryl 3,3'-thiodipropionate and 1.5 parts of triethylene glycol bis-3-(3-t-butyl-4-hydroxy-5-methylphenyl) propionate, and then 5 parts of calcium chloride was added to effect salting-out, which was followed by heat treatment at 90°C and then by dehydration and drying to obtain a resin powder of a core-shell elastic material (C-1).

### <Production Example 9>

### <Preparation of Polybutadiene Rubber Latex>

A 100-liter pressure-resistant polymerization reactor was charged with 200 parts of water, 0.2 parts of potassium persulfate, and 0.2 parts of t-dodecyl mercaptan, and the reactor contents were stirred and thoroughly purged with nitrogen to remove oxygen. After that, 1 part of sodium oleate, 2 parts of sodium rosinate, and 100 parts of butadiene were added to the reaction system, which was heated to 60°C to initiate polymerization. After 12 hours, the polymerization was ended. The conversion rate was 96%, and the mean particle diameter of the rubber latex was 70 nm.

### <Preparation of Acid Group-Containing Latex>

An 8-liter polymerization reactor was charged with 200 parts of water and 0.5 parts of sodium dioctyl sulfosuccinate, and the reactor contents were heated to 70°C while being stirred under a stream of nitrogen. Subsequently, 0.3 parts of sodium formaldehyde sulfoxylate, 0.0025 parts of ferrous sulfate, and 0.01 parts of ethylenediaminetetraacetic acid were added. After several minutes, a mixture of 2 parts of butyl methacrylate, 23 parts of butyl acrylate, 2 parts of methacrylic acid, 0.125 parts of t-dodecyl mercaptan, and 0.025 parts of cumene hydroperoxide was continuously added dropwise at a rate of 20 parts/hour by means of a metering pump. After the addition of the mixture, a mixture of 58 parts of butyl methacrylate, 2 parts of butyl acrylate, 13 parts of methacrylic acid, 0.3 parts of t-dodecyl mercaptan, and 0.08 parts of cumene hydroperoxide was also added dropwise at a rate of 20 parts/hour, and 1.5 hours after the end of the dropwise addition, the polymerization was ended. The conversion rate was 99.7%, and the resulting latex had a mean particle diameter of 120 nm, a concentration of 33%, and a pH of 2.8.

### <Preparation of Expanded Polybutadiene Rubber Latex>

An 8-liter polymerization reactor was charged with 100 parts (amount of solids) of the polybutadiene rubber latex obtained above and 20 parts of water, and the reactor contents were heated to 60°C while being stirred under a stream of nitrogen. Subsequently, 0.1 parts of sodium hydroxide and 2.0 parts (amount of solids) of the acid group-containing latex obtained above were added, and the reactor contents were stirred for 1 hour to expand the polybutadiene. Furthermore, 200 parts of water and 0.4 parts of sodium dodecylbenzenesulfonate were added, and the reactor contents were stirred for another 30 minutes, after which the expansion was ended. As a result, an expanded polybutadiene rubber latex with a mean particle diameter of 350 nm was obtained.

### <Graft Copolymerization of Expanded Polybutadiene Rubber>

An 8-liter polymerization reactor was charged with 70 parts (amount of solids) of the expanded polybutadiene rubber latex obtained above, and the latex was heated to 60°C while being stirred under a stream of nitrogen. Subsequently, 0.18 parts of sodium formaldehyde sulfoxylate, 0.001 parts of ferrous sulfate, and 0.004 parts of ethylenediaminetetraacetic acid were added, and a graft monomer mixture (8 parts of styrene and 22 parts of methyl methacrylate) to which was added 0.2 parts of t-butyl hydroperoxide was continuously added dropwise at a rate of 10 parts/hour by means of a metering pump. During the addition of the monomer mixture, 0.2 parts of sodium dioctyl sulfosuccinate was added four times at 1-hour intervals to maintain the stability of the latex. After the end of the addition of the monomer mixture, the reactor contents were stirred for another 1 hour to complete the polymerization. The polymerization conversion rate was 96%, and the mean particle diameter of the latex was 350 nm. To the latex were added 0.5 parts of dilauryl 3,3'-thiodipropionate and 0.5 parts of 2,6-di-t-butyl-4-methylphenol, and then 5 parts of calcium chloride was added to effect salting-out, which was followed by heat treatment at 90°C and then by dehydration and drying to obtain a resin powder of a core-shell elastic material (C-2).

### <Production Example 10>

A glass reactor equipped with a thermometer, a stirrer, a reflux condenser, a nitrogen stream inlet, and a device for adding monomers and emulsifiers was charged with 155 parts of deionized water, 0.47 parts of boric acid, 0.047 parts of sodium carbonate, and 0.016 parts of polyoxyethylene lauryl ether phosphate, and the reactor contents were heated to 50°C while being stirred under a stream of nitrogen. Subsequently, a mixture of 8.50 parts of butyl acrylate (BA), 0.0425 parts of allyl methacrylate, and 0.0017 parts of *t*-butyl hydroperoxide was added at one time. At 10 minutes after the end of the addition, 0.0056 parts of disodium ethylenediaminetetraacetate, 0.0014 parts of ferrous sulfate, and 0.2 parts of sodium formaldehyde sulfoxylate were placed into the reactor. After another 50 minutes, 0.02 parts of sodium hydroxide was added, and then a mixture of 76.5 parts of BA, 0.38 parts of allyl methacrylate, 0.765 parts of polyoxyethylene lauryl ether phosphate, 0.025 parts of t-butyl hydroperoxide, and 0.06 parts of sodium hydroxide was added over 173 minutes. After the end of the addition, 0.012 parts of sodium hydroxide was added, and after another 15 minutes 0.014 parts of t-butyl hydroperoxide was added.

After 30 minutes, a mixture of 13.5 parts of MMA, 1.5 parts of BA, 0.141 parts of polyoxyethylene lauryl ether phosphate, and 0.0069 parts of t-butyl hydroperoxide was added over 36 minutes. After the end of the addition, 0.01 parts of sodium hydroxide was added, and after another 15 minutes 0.015 parts of *t*-butyl hydroperoxide was added. After another 15 minutes, 0.03 parts of t-butyl hydroperoxide was added, and then the reactor contents were stirred for 30 minutes. As a result, a polymer particle latex was obtained at a polymerization conversion rate of 100%. The mean particle diameter of the latex was 300 nm.

A mixture of 500 parts of deionized water and 3.0 parts of an aqueous calcium chloride solution having a concentration of 25 wt% was stirred, and then the polymer particle latex was placed into the mixture to obtain a slurry containing coagulated latex particles. After that, the obtained slurry was heated to 90°C, and the heating was followed by dehydration and drying to obtain a white resin powder of a core-shell elastic material (C-3).

### <Examples 1 to 10 and Comparative Examples 1 to 12>

Components listed below were used according to the proportions shown in Tables 2 and 3 to prepare pellets and test specimens made of a resin composition containing a polycarbonate resin, and the test specimens were tested for Charpy impact strength (impact resistance), tensile properties, flexural properties, HDT, flame retardancy, and MFR. The MFR is an index of melt fluidity. A higher MFR value indicates higher melt fluidity.
Component (A): Polycarbonate resin (Panlite L-1225WP manufactured by Teijin Limited), used in the amounts (wt%) indicated in the tables
Component (B): Flow improver, used in the amounts (wt%) indicated in the tables
   - B-1: Flow improver (B-1) produced in Production Example 1
   - B-2: Flow improver (B-2) produced in Production Example 2
   - B-3: Flow improver (B-3) produced in Production Example 3
   - B-4: Flow improver (B-4) produced in Production Example 4 [0135] Component (B'): Flow improver for comparison, used in the amounts (wt%) indicated in the tables
   - B'-1: Acrylonitrile-styrene resin (SAN-R manufactured by Techno Polymer Co., Ltd.), weight-average molecular weight = 123,000
   - B'-2: Flow improver (B'-2) for comparison produced in Production Example 6
   - B'-3: Flow improver (B'-3) for comparison produced in Production Example 7 [0136] Component (C): Core-shell elastic material, used in the amounts (parts by weight per 100 parts by weight of the total amount of the components (A), (B) or (B'), and (D)) indicated in the tables
   - C-1: Core-shell elastic material (C-1) produced in Production Example 8, volume mean diameter = 120 nm
   - C-2: Core-shell elastic material (C-2) produced in Production Example 9, volume mean diameter = 350 nm
   - C-3: Core-shell elastic material (C-3) produced in Production Example 10, volume mean diameter = 300 nm
Component (D): Modifier (D-1) produced in Production Example 5, used in the amounts (wt%) indicated in the tables
Component (E): Flame retardant (aromatic condensed phosphoric ester, PX200 manufactured by Daihachi Chemical Industry Co., Ltd.), 0 part by weight in Table 2 and 15 parts by weight per 100 parts by weight of the total amount of the components (A), (B) or (B'), and (D) in Table 3

### Other Additives

Anti-dripping agent: PTFE G355 manufactured by Asahi Glass Co., Ltd, 0.1 parts by weight per 100 parts by weight of the total amount of the components (A), (B) or (B'), and (D)
Stabilizer: ADK STAB 2112 and ADK STAB AO-60 manufactured by Adeka Corporation, 0.1 parts by weight per 100 parts by weight of the total amount of the components (A), (B) or (B'), and (D)

### (Conditions of Preparation of Pellets and Test specimens)

A mixture of the components was kneaded and extruded by a twin-screw extruder (TEX 44SS manufactured by The Japan Steel Works, Ltd.) heated to a barrel temperature of 230 to 260°C and operated at a screw rotational speed of 100 rpm, and thus pellets were obtained.

The pellets were dried by a dryer at 100°C for 12 hours to fully reduce the moisture content, and then the dried pellets were made into a test specimen using an injection molding machine (FAS 100B manufactured by Fanuc Corporation) at a molding temperature of 270 to 290°C and a mold temperature of 50°C.

### (Charpy Impact Strength)

A V-notched test specimen prepared by the method as described above and having a length of 63.5 mm, a width of 12.7 mm, and a thickness of 3.2 mm was tested for Charpy impact strength at -30°C and 23°C by a method according to ASTM D6110.

### (Tensile Properties)

A 3.2-mm-thick test specimen prepared by the method as described above and shaped according to ASTM D638-1 was dried to absolute dryness and tested for yield strength and elongation at break at 23°C by a method according to ASTM D638 at a test speed of 50 mm/min.

### (Flexural Properties)

The flexural strength and the flexural modulus were measured according to ASTM D-0790 using a 1/4-inch bar at a test speed of 5 mm/min, a temperature of 23°C, and a support span of 100 mm.

### (HDT)

A test specimen prepared by the method as described above and having a length of 127 mm, a width of 12.7 mm, and a thickness of 6.4 mm was annealed at 60°C for 2 hours, after which the test specimen was tested for HDT (deflection temperature under load) by a method according to ASTM D648 at a load of 18.6 kgf/cm².

### (Flame Retardancy)

Pellets prepared under the conditions described above were dried at 100°C for 8 hours, after which the pellets were subjected to injection molding using an injection molding machine (TOYO (100i), clamping pressure = 100 tons) at a cylinder set temperature of 235 to 260°C and a mold temperature of 50°C to obtain a test specimen with dimensions of 127 mm × 12.7 mm × 1.2 mm (thickness). The obtained bar-shaped test specimen having a thickness of 1.2 mm was used to evaluate flammability according to the UL 94 V test.

### (MFR)

Pellets prepared under the conditions described above were used to measure the MFR value according to the method A of JIS K 7210 at a measurement temperature of 250°C and a load of 5 kg.

The results of the above measurements are shown in Tables 2 and 3.

**[Table 2]**

| | Component (A) | Component (B) | | Component (B') or (D) | | Component (C) | | Charpy impact strength | Tensile properties | | Flexural properties | | HDT | MFR 250°C |
|---|---|---|---|---|---|---|---|---|---|---|---|---|---|---|
| | (wt%) | Type | (wt%) | Type | (wt%) | Type | (parts by weight) | 23°C (kJ/m²) | Yield strength (MPa) | Elongation at break (%) | Flexural strength (MPa) | Flexural modulus | °C | g/10 min |
| Ex. 1 | 90 | B-1 | 10 | - | - | C-1 | 10 | 90.6 | 53.7 | 123.3 | 84.8 | 2161.4 | 116.7 | 15.0 |
| Ex.2 | 95 | B-1 | 5 | - | - | C-1 | 10 | 89.4 | 54.5 | 126.5 | 85.2 | 2182.3 | 120.5 | 11.0 |
| Comp. 1 | 70 | B-1 | 30 | - | - | - | - | 1.2 | 59.4 | 34.7 | 106.9 | 2914.1 | 98.8 | 108.0 |
| Comp. 2 | 80 | B-1 | 20 | - | - | - | - | 4.3 | 59.2 | 126.0 | 100.5 | 2577.9 | 108.5 | 42.3 |
| Comp. 3 | 90 | B-1 | 10 | - | - | - | - | 3.4 | 62.0 | 130.5 | 105.6 | 2779.2 | 105.3 | 22.4 |
| Comp. 4 | 70 | - | - | B'-1 | 30 | C-1 | 10 | 72.9 | 57.6 | 124.1 | 90.3 | 2392.6 | 103.6 | 10.6 |
| Comp. 5 | 70 | B-1 | 30 | - | - | C-1 | 10 | 1.2 | 55.8 | 71.9 | 86.8 | 2227.2 | 95.6 | 68.8 |
| Comp. 6 | 80 | B-1 | 20 | - | - | C-1 | 10 | 6.9 | 55.1 | 96.3 | 86.5 | 2229.2 | 108.2 | 33.4 |
| Comp. 7 | 100 | - | - | - | - | C-1 | 10 | 62.0 | 59.0 | 125.0 | 89.0 | 2083.2 | 121.5 | 1.8 |

Table 2 shows data about the systems that did not contain the flame retardant (E). The polycarbonate resin compositions of Examples 1 and 2 exhibited satisfactory levels of melt fluidity, impact resistance, and heat resistance and had a good balance of these physical properties.

As for Comparative Examples 1 to 3 in which the core-shell elastic material (C) was not contained, it is seen that the impact resistance was extremely low and the heat resistance was also low. As for Comparative Example 4 in which a common acrylonitrile-styrene resin was contained as the flow improver (B'-1) for comparison, it is seen that the impact resistance was satisfactory but lower than in Examples 1 to 2, the melt fluidity was insufficient as demonstrated by the low MFR value, and the heat resistance was also low. As for Comparative Examples 5 and 6 in which the amount of the flow improver (B) was large, it is seen that the impact resistance was low and the heat resistance was also low. As for Comparative Example 7 in which the flow improver (B) was not contained, the impact resistance was low and the melt fluidity was also insufficient.

**[Table 3]**

| | Component (A) | Component (B) | | Component (B') or (D) | | Component (C) | | Component (E) | Charpy impact strength | | Tensile properties | | Flexural properties | | HDT | Flame retardancy | MFR 250°C |
|---|---|---|---|---|---|---|---|---|---|---|---|---|---|---|---|---|---|
| | (wt%) | Type | (wt%) | Type | (wt%) | Type | (parts by weight) | (parts by weight) | 23°C | -30°C | Yield strength (MPa) | Elongation at break (%) | Flexural strength (MPa) | Flexural modulus | °C | 1.2 mm | g/10 min |
| | | | | | | | | | (kJ/m²) | (kJ/m²) | | | | | | | |
| Ex. 3 | 90 | B-2 | 10 | - | - | C-1 | 10 | 15 | 43.4 | 8.7 | 58.2 | 123.3 | 91.6 | 2423.1 | 93.3 | V-1 | 34.0 |
| Ex. 4 | 90 | B-3 | to | - | - | C-1 | 10 | 15 | 42.7 | 9.1 | 58.8 | 122.5 | 92.7 | 2498.2 | 88.6 | not-V | 33.0 |
| Ex. 5 | 90 | B-3 | 10 | - | - | C-2 | 10 | 15 | 64.1 | 10.1 | 57.2 | 97.3 | 88.6 | 2455.9 | 88.0 | V-1 | 31.0 |
| Ex. 6 | 90 | B-3 | 10 | - | - | C-3 | 10 | 15 | 58.2 | 6.2 | 57.1 | 95.6 | 87.1 | 2418.8 | 89.8 | not-V | 40.9 |
| Ex. 7 | 90 | B-1 | 10 | - | - | C-1 | 10 | 15 | 41.0 | 12.5 | 58.6 | 63.2 | 92.0 | 2507.9 | 87.9 | V-1 | 35.9 |
| Ex. 8 | 90 | B-4 | 10 | - | - | C-1 | 10 | 15 | 44.2 | 10.6 | 58.4 | 112.7 | 91.9 | 2482.4 | 92.1 | V-1 | 33.2 |
| Ex. 9 | 90 | B-1 | 9 | D-1 | 1 | C-1 | 10 | 15 | 60.3 | 10.9 | 59.4 | 116.0 | 96.0 | 2553.5 | 88.6 | V-1 | 34.6 |
| Ex. 10 | 90 | B-2 | 9 | D-1 | 1 | C-t | 10 | 15 | 71.1 | 20.7 | 57.6 | 113.0 | 87.7 | 2482.2 | 87.3 | not-V | 21.7 |
| Comp. 8 | 80 | B-2 | 20 | - | - | C-1 | 10 | 15 | 6.6 | 2.3 | 58.2 | 101.0 | 89.6 | 2497.4 | 85.6 | not-V | 71.2 |
| Comp. 9 | 80 | B-3 | 20 | - | - | C-1 | 10 | 15 | 5.7 | 3.0 | 58.7 | 66.2 | 92.4 | 2598.6 | 85.0 | not-V | 71.2 |
| Comp. 10 | 90 | - | - | D-1 | 10 | C-1 | 10 | 15 | 45.8 | 13.2 | 57.2 | 62.7 | 90.8 | 2536.8 | 78.7 | V-1 | 19.9 |
| Comp. 11 | 90 | - | - | B'-2 | 10 | C-1 | 10 | 15 | 9.9 | 6.0 | 59.4 | 78.9 | 95.6 | 2591.3 | 76.7 | not-V | 28.7 |
| Comp. 12 | 90 | - | - | B'-3 | 10 | C-1 | 10 | 15 | 15.6 | 10.0 | 56.6 | 102.1 | 89.8 | 2450.1 | 80.0 | not-V | 26.7 |

Table 3 shows data about the systems that contained the flame retardant (E). The polycarbonate resin compositions of Examples 3 to 10 exhibited satisfactory levels of melt fluidity, impact resistance, and heat resistance and had a good balance of these physical properties.

As for Comparative Examples 8 and 9 in which the amount of the flow improver (B) was large, it is seen that the impact resistance was extremely low. As for Comparative Example 10 in which the flow improver (B) was not used but instead the modifier (D-1) was used which contained a polymer with a high weight-average molecular weight and did not meet the requirements for use as the flow improver (B), it is seen that the heat resistance was extremely low and the melt fluidity was also relatively low. As for Comparative Examples 11 and 12 in which the flow improver (B'-2) or (B'-3) for comparison was used which did not meet the requirements for the monomer composition of the flow improver (B) according to the present application, it is seen that the impact resistance was extremely low and the heat resistance was also low.

## Claims

1. A polycarbonate resin composition comprising:
a polycarbonate resin (A);
a flow improver (B) comprising a first polymer (b1); and
a core-shell elastic material (C), wherein
an amount of the flow improver (B) is from 1 to 15 wt% of a total amount of the polycarbonate resin (A) and the flow improver (B),
an amount of the core-shell elastic material (C) is from 1 to 30 parts by weight per 100 parts by weight of the total amount of the polycarbonate resin (A) and the flow improver (B),
the first polymer (b1) comprises 50 to 70 wt% of an aromatic vinyl compound, 5 to 20 wt% of a vinyl cyanide compound, and 10 to 45 wt% of another copolymerizable vinyl compound as constituent monomers based on 100 wt% of the total first polymer (b1), and
the first polymer (b1) has a weight-average molecular weight of 15,000 to 120,000.

2. The polycarbonate resin composition according to claim 1, wherein the flow improver (B) further comprises a second polymer (b2) covering the first polymer (b1).

3. The polycarbonate resin composition according to claim 2, wherein the second polymer (b2) comprises 50 to 90 wt% of an alkyl methacrylate and 10 to 50 wt% of another copolymerizable vinyl compound as constituent monomers based on 100 wt% of the total second polymer (b2).

4. The polycarbonate resin composition according to claim 2 or 3, wherein in the flow improver (B), an amount of the first polymer (b1) is from 60 to 90 wt% and an amount of the second polymer (b2) is from 10 to 40 wt%.

5. The polycarbonate resin composition according to any one of claims 1 to 3, wherein the core-shell elastic material (C) comprises: a core layer comprising butadiene rubber or styrene/butadiene copolymer rubber; and a shell layer comprising a copolymer comprising at least one selected from the group consisting of methyl methacrylate, styrene, and butyl acrylate as a constituent monomer.

6. The polycarbonate resin composition according to any one of claims 1 to 3, wherein the flow improver (B) comprises a phosphoric acid emulsifier or a sulfonic acid emulsifier.

7. The polycarbonate resin composition according to any one of claims 1 to 3, wherein the core-shell elastic material (C) has a volume mean diameter of 100 nm or more.

8. The polycarbonate resin composition according to any one of claims 1 to 3, further comprising a modifier (D) comprising a third polymer (d1), wherein
the third polymer (d1) has a weight-average molecular weight of 150,000 to 7,000,000.

9. The polycarbonate resin composition according to any one of claims 1 to 3, further comprising a flame retardant (E).

10. A molded article produced by molding the polycarbonate resin composition according to any one of claims 1 to 3.
